# EUROPEAN PATENT SPECIFICATION

(11) **EP 4 241 432 B1**
(45) Date of publication and mention of the grant of the patent: **07.08.2024**
(21) Application number: 20800905.0
(22) Date of filing: 03.11.2020
(51) Int. Cl.: H04W 36/22, H04W 28/22, H04L 47/25

(54) **HANDLING OF COMMUNICATION INTERRUPTION**
HANDHABUNG VON KOMMUNIKATIONSUNTERBRECHUNGEN
GESTION D'INTERRUPTION DE COMMUNICATION

(43) Date of publication of application: 13.09.2023
(73) Proprietor: Telefonaktiebolaget LM Ericsson (publ), 164 83 Stockholm (SE)
(72) Inventor: RONKAINEN, Henrik, 247 33 Södra Sandby (SE); SÖLVE, Torbjörn, 216 19 Malmö (SE); WITTENMARK, Emma, 222 40 Lund (SE); STRAND, Johan, 245 33 Staffanstorp (SE); ÖSTBERG, Christer, 245 44 Staffanstorp (SE); GUSTAFSSON, Kjell, 224 72 Lund (SE)
(74) Representative: Ericsson
(86) International application number: PCT/EP2020/080818
(87) International publication number: WO 2022/096080

(56) References cited:
- GB-A- 2 399 989
- US-A1- 2013 223 222
- US-A1- 2014 355 428
- SPREADTRUM COMMUNICATIONS: "Handling of collision involving measurement gap", vol. RAN WG2, no. electronic; 20200601 - 20200612, 22 May 2020 (2020-05-22), XP051888544, Retrieved from the Internet <URL:https://ftp.3gpp.org/tsg_ran/WG2_RL2/TSGR2_110-e/Docs/R2-2005051.zip R2-2005051 Handling of collision involving measurement gap.doc> [retrieved on 20200522]

## Description

### TECHNICAL FIELD

The present disclosure relates generally to the field of wireless communication. More particularly, it relates to approaches to accommodate communication interruptions; e.g., for latency control in wireless communication scenarios.

### BACKGROUND

Communication interruptions may occur in wireless communication systems for various reasons. One example of a communication interruption is a measurement gap enabling a user device to perform measurements in relation to frequency bands not currently used for communication with the user device.

Communication interruptions may affect the latency of wireless communication. Different forms of latency control are generally applied in wireless communication scenarios.

GB2399989A describes an approach for packet control in cellular communications. The method comprises determining a probability of an interruption (due to cell handover) in a communication route between a packet control means and a subscriber unit, and depending on the probability, performing a packet control process (e.g., reducing the rate of data packets).

US2013/0223222A1 describes an approach for dynamically provisioning subscribers to manage network traffic.

Spreadtrum Communications, "Handling of collision involving measurement gap", R2-2005051, 3GPP TSG-RAN WG2 Meeting #110, June 2020 describes a problem associated with Time-Sensitive Networking (TSN) transmission colliding with measurement gaps.

US2014/0355428A1 describes an approach for dynamic spectrum arbitrage policy driven quality of service.

In some situations, existing approaches for latency control do not provide for desirable performance.

Therefore, there is a need for alternative approaches for latency control in relation to communication interruptions; or - more generally - there is a need for approaches to handling of communication interruptions.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

It is an object of some embodiments to solve or mitigate, alleviate, or eliminate at least some of the above or other disadvantages.

An advantage of some embodiments is that approaches to handling of communication interruptions are provided, in accordance with appended independent claims. Further embodiments are disclosed in the dependent claims. Examples or embodiments that do not fall within the scope of the appended claims, are non-claimed embodiments and are presented only as information.

An advantage of some embodiments is that alternative approaches for latency control are provided; particularly suitable in relation to communication interruptions. Generally, the alternative approaches for latency control may be used instead of, or together with, other approaches for latency control, as suitable.

An advantage of some embodiments is that the probability of occurrences with relatively large latency (e.g., latency spikes) may be reduced.

An advantage of some embodiments is that the latency variance may be reduced.

An advantage of some embodiments is that accommodation of latency variations of a communication network is enabled, under the constraint of latency requirements on communication between end points of a service.

An advantage of some embodiments is that provision of a real-time service is robust in the presence of communication interruptions.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a schematic block diagram illustrates an example communication scenario according to some embodiments;
Figure 2 is a schematic block diagram illustrates an example communication scenario according to some embodiments;
Figure 3A is a flowchart illustrating example method steps according to some embodiments;
Figure 3B is a schematic block diagram illustrating an example system model according to some embodiments;
Figure 4 is a collection of timing diagrams illustrating example approaches according to some embodiments;
Figure 5A is a schematic drawing illustrating an example system model according to some embodiments;
Figure 5B is a signaling diagram illustrating example signaling according to some embodiments;
Figure 5C is a schematic drawing illustrating an example system model according to some embodiments;
Figure 5D is a signaling diagram illustrating example signaling according to some embodiments;
Figure 6 is a collection of schematic block diagrams illustrating example apparatuses according to some embodiments; and
Figure 7 is a schematic drawing illustrating an example computer readable medium according to some embodiments.

### DETAILED DESCRIPTION

As already mentioned above, it should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings.

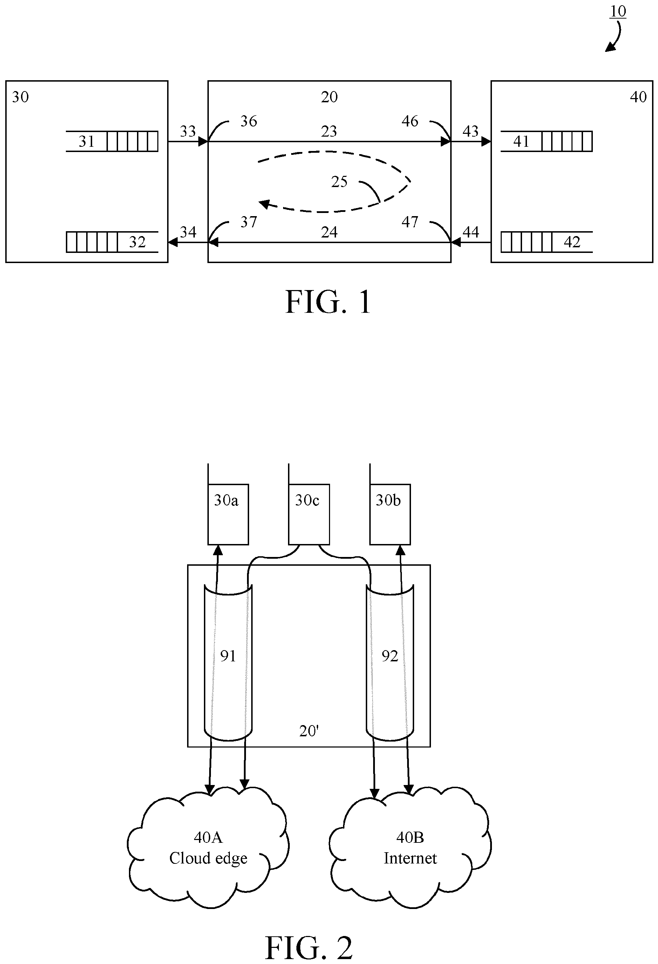

As mentioned before, different forms of latency control are generally applied in wireless communication scenarios. Figure 1 schematically illustrates a communication scenario 10 for demonstrating a type of situation where latency control may be challenging.

The communication scenario 10 comprises two communication end points 30, 40 and a communication network 20. The communication network 20 is for carrying information (e.g., data and/or control information) from end point 30 to end point 40 as illustrated by 33, 23, and 43 and/or from end point 40 to end point 30 as illustrated by 44, 24, and 34.

The end points 30, 40 may be any suitable communication end points. One example of a communication end point pair is an application client-server pair.

Depending on the type of service the end points 30, 40 are engaged in, there may be different latency requirements on the communication between the end points 30, 40.

Generally, latency of communication between the end points 30, 40 may be defined as one or more of: a time for transfer of information from end point 30 to end point 40 (possibly defined as a time between information entering a transmission buffer 31 associated with the end point 30 and the same information being dispatched from a reception buffer 41 associated with the end point 40), a time for transfer of information from end point 40 to end point 30 (possibly defined as a time between information entering a transmission buffer 42 associated with the end point 40 and the same information being dispatched from a reception buffer 32 associated with the end point 30), a time from issuing of first information at end point 30 (possibly defined as a time when the first information enters a transmission buffer 31 associated with the end point 30) to reception of second information at end point 30 (possibly defined as a time when the second information is dispatched from a reception buffer 32 associated with the end point 30) wherein the second information is issued by end point 40 in response to reception of the first information, and a time from issuing of first information at end point 40 (possibly defined as a time when the first information enters a transmission buffer 42 associated with the end point 40) to reception of second information at end point 40 (possibly defined as a time when the second information is dispatched from a reception buffer 41 associated with the end point 40) wherein the second information is issued by end point 30 in response to reception of the first information.

Alternatively or additionally, and generally, latency of communication between end points may be characterized by one or more of: an average duration of end point to end point transfer, a minimum duration of end point to end point transfer, a maximum duration of end point to end point transfer, a variance of the duration of end point to end point transfer, and a probability that duration of end point to end point transfer exceeds a duration threshold.

Generally, end point to end point transfer may refer to a one way transfer or to a round-trip-time (RTT).

The latency requirements on the communication between the end points may be defined according to any of the above, or other suitable, definitions and characterization. For example, a specific service may require that the time from issuing of first information at end point 30 to reception of second information at end point 30 (wherein the second information is issued by end point 40 in response to reception of the first information) is below a maximum duration value and/or has a variance below a maximum variance value.

The communication network 20 may be any suitable communication network. One example of a communication network is any wireless communication network operating in accordance with a standard advocated by the third generation partnership project (3GPP); e.g., the universal mobile telecommunication system (UMTS), UMTS long term evolution (LTE), or a fifth generation (5G) system. The communication network may, for example, comprise a radio access network (RAN) and/or a core network (CN).

The communication network 20 typically has an internal latency performance, schematically illustrated by 25.

The internal latency performance 25 of the communication network 20 determines (e.g., limits) how quickly information delivered to the communication network at 36 can be transferred through the communication network over 23 and provided at 46 and/or how quickly information delivered to the communication network at 47 can be transferred through the communication network over 24 and provided at 37.

The internal latency performance 25 of the communication network 20 may be characterized in terms of the duration (delay) of the transfer over 23 and/or 24. For example, the internal latency performance 25 of the communication network 20 may be characterized by one or more of: an average duration of transfer through the communication network, a minimum duration of transfer through the communication network, a maximum duration of transfer through the communication network, a variance of the duration of transfer through the communication network, and a probability that duration of transfer through the communication network exceeds a duration threshold.

Generally, transfer through the communication network may refer to a one way transfer or to a round-trip-time (RTT).

The internal latency performance 25 of the communication network 20 may be caused by one or more of various (standardized or non-standardized) settings and limitations of the communication network. Some example settings and limitations of a communication network that inherently introduce latency include - but are not limited to - standardized time domain dimensions of communication resources (e.g., time duration of one or more units for communication), scheduling principles, protocols (e.g., retransmission protocols such as hybrid automatic repeat request - HARQ), and response requirements (e.g., for acknowledgement - ACK).

When the latency requirements on the communication between the end points are easily accommodated by the internal latency performance of the communication network, the end-to-end communication scenario is unproblematic from a latency perspective.

Such situations may, for example, occur when an average duration of transfer through the communication network is much lower than a required average duration of end point to end point transfer, when a maximum duration of transfer through the communication network is much lower than a required maximum (or average) duration of end point to end point transfer, and/or when a variance of duration of transfer through the communication network is much lower than a required maximum variance of duration of end point to end point transfer.

When the latency requirements on the communication between the end points are impossible to fully accommodate by the internal latency performance of the communication network, the end-to-end communication scenario is infeasible from a latency perspective.

Such situations may, for example, occur when an average duration of transfer through the communication network is much higher than a required average duration of end point to end point transfer, when a minimum duration of transfer through the communication network is higher than a required minimum (or average) duration of end point to end point transfer, and/or when a variance of duration of transfer through the communication network is higher than a required maximum variance of duration of end point to end point transfer.

These problems may be solved by application of a different communication network, or a specifically designed communication type within the communication network, to accommodate the latency requirements on the communication between the end points.

Embodiments presented herein are particularly applicable in situations which are neither of the above, i.e., situations when the latency requirements on the communication between the end points are not impossible, but not easy either, to accommodate by the internal latency performance of the communication network. Then, the end-to-end communication scenario is feasible, but problematic (e.g., presenting challenges), from a latency perspective. This may be seen as the end-to-end communication scenario comprising a service which is latency sensitive (i.e., with latency requirements on the communication between the end points) in relation to the internal latency performance of the communication network (i.e., latency sensitive service).

Such situations may, for example, occur when an average duration of transfer through the communication network is similar to a required average duration of end point to end point transfer, when a maximum duration of transfer through the communication network is similar to a required maximum duration of end point to end point transfer, and/or when a variance of duration of transfer through the communication network is similar to a required maximum variance of duration of end point to end point transfer.

Generally, a latency sensitive service associated with a user of a communication network may be defined as a service with latency requirements on the communication between the end points which are similar to the internal latency performance of the communication network.

For example, a latency sensitive service associated with a user of a communication network may be defined as a service with one or more latency requirement parameter value (e.g., average duration of transfer, maximum duration of transfer, variance of transfer duration, etc.) for the communication between the end points being in the same order of magnitude as the value of a corresponding parameter of the internal latency performance of the communication network.

Alternatively or additionally, a latency sensitive service associated with a user of a communication network may be defined as a service with one or more latency requirement parameter value (e.g., average duration of transfer, maximum duration of transfer, variance of transfer duration, etc.) for the communication between the end points deviating from the value of a corresponding, or otherwise relevant, parameter of the internal latency performance of the communication network by less than a threshold value.

Alternatively or additionally, a latency sensitive service associated with a user of a communication network may be defined as a service with a requirement of maximum duration of transfer for the communication between the end points which is lower than a maximum duration of transfer through the communication network.

Alternatively or additionally, a latency sensitive service associated with a user of a communication network may be defined as a service with a requirement of average duration of transfer for the communication between the end points deviates from an average duration of transfer through the communication network by less than a threshold value.

Alternatively or additionally, a latency sensitive service associated with a user of a communication network may be defined as a service with a requirement of variance of duration of transfer for the communication between the end points which is lower than a value based on a variance of duration of transfer through the communication network (e.g., lower than the variance of duration of transfer through the communication network, or lower than the variance of duration of transfer through the communication network plus or minus a bias value).

The problems associated with latency sensitive services may be solved in the same way as situations where the end-to-end communication scenario is infeasible from a latency perspective, i.e., by application of a different communication network, or a specifically designed communication type within the communication network, to more easily accommodate the latency requirements on the communication between the end points. However, application of a communication network (or a specifically designed communication type within a communication network) which accommodates strict latency requirements on the communication between the end points is typically inefficient in terms of throughput and/or capacity. For example, increasing the amount of allocated communication resources is one approach that is helpful to accommodate strict latency requirements on the communication between the end points, but has a negative impact on overall throughput of the communication network.

Therefore, there is a need for alternative approaches for latency control, which preferably address the problems associated with latency sensitive services (i.e., services with a sensitive relationship between latency requirements on the communication between the end points and the internal latency performance of the communication network).

A more detailed context will now be described, in relation to which embodiments may be particularly applicable. It should be noted that the following context is merely an illustrative example and not to be construed as limiting.

Some typical existing wireless communication networks (e.g., 3GPP-based networks supporting fourth generation, 4G, and earlier releases of the communication standard) are mainly optimized for mobile broadband (MBB) services and voice services. Generally, MBB traffic is not particularly latency sensitive but can be very throughput demanding. For example, for streaming services latency is typically handled by using large buffers which will efficiently hide latency jitter caused by latency events in the communication network, and thereby provide good end user experience. This exemplifies situations when the latency requirements on the communication between the end points are easily accommodated by the internal latency performance of the communication network, and the end-to-end communication scenario is unproblematic from a latency perspective.

In later releases of 4G, and especially in 5G, services of other types than MBB and voice have come into focus. One example is ultra-reliable low latency communication (URLLC) services. URLLC may be particularly suitable for industrial applications. Within 3GPP standardization, features are developed to support these new URLLC services and use cases. This exemplifies situations when the latency requirements on the communication between the end points are impossible to fully accommodate by the internal latency performance of the communication network, the end-to-end communication scenario is infeasible from a latency perspective, and a specifically designed communication type within the communication network is applied to accommodate the latency requirements on the communication between the end points.

Embodiments presented herein are particularly applicable in situations which are neither of the above (MBB, voice, and URLLC), i.e., situations when the latency requirements on the communication between the end points are not impossible, but not easy either, to accommodate by the internal latency performance of the communication network (referred to herein as latency sensitive services). In some embodiments, a relatively high throughput is also required (which is typically not the case for services requiring a specifically designed communication type, e.g., URLLC).

Some typical example services where embodiments may be particularly applicable - e.g., in the context of a 3GPP-based communication network - are gaming applications (gaming with or without rendering, and including multi-user gaming), augmented reality (AR), virtual reality (VR), tele-operated vehicle control (e.g., driving), real-time video transfer, and other real-time services.

Generally, the latency through the radio network (RAN), the core network (CN), and all the way to the communication end points (e.g., application client and application server) needs to be considered in view of latency requirements on the communication between the end points. One approach to reduce the impact of CN latency and/or of latency between the communication network and the application server, is to apply an edge cloud deployment of the application.

For situations when the latency requirements on the communication between the end points are not impossible, but not easy either, to accommodate by the internal latency performance of the communication network, some example latency requirements include a maximum round-trip-time (RTT) for communication between end points (end-to-end, E2E, RTT) in any of the ranges 10-100 ms, 30-100 ms, 30-50 ms, and 80-100 ms, and/or some example throughput requirements include a throughput in the range 5-10 Mbps or there over; up to 400 Mbps (e.g., for VR streaming applications).

For situations when the latency requirements on the communication between the end points are not impossible, but not easy either, to accommodate by the internal latency performance of the communication network, it may be further beneficial to consider reliability of the communication (e.g., measured as the probability of delivering traffic within a specified time duration, i.e., fulfilling the latency requirement). The reliability is tightly coupled with the latency requirements (without any latency requirement, the traffic can always be delivered, e.g., by using sufficiently many retransmissions). Thus, reliability is a relevant metric when a communication network is tuned for latency sensitive traffic.

Thus, some communication networks are typically dimensioned and configured to provide services (e.g., for MBB traffic) with high throughput and relatively relaxed latency requirements. Although latency is typically considered in such communication networks (e.g., in relation to transmission control protocol, TCP, throughput and ramp-up times), predictable latency (i.e., low latency variance) is typically not required. One explanation to the latter is that the timing requirements in some human-machine interaction (e.g., web-browsing and video streaming) is quite relaxed and rather large latency variations can be hidden with buffers.

For latency sensitive services, however, extensive use of buffers is not possible due to the nature of the applications (e.g., quick reaction times required for gaming, fast control response required for vehicle tele-operation, etc.). Typically, a latency spike will have negative impact on the application experience/performance for latency sensitive services. Some example events in a communication network that may cause latency spikes include handovers, slow fading dips, and fast fading dips.

In association with some typical communication networks (e.g., 3GPP-based networks for 4G and 5G), efforts are made to reduce overall latency (e.g., reducing the average latency). This, however, does not exclude a relatively large maximum latency and/or a relatively large latency variation (which may result in latency spikes, for example).

Regarding handover, some typical communication networks (e.g., 3GPP-based networks for 4G and 5G) apply a handover mechanism where service by one cell is released before service setup towards a target cell is completed. This mechanism causes a brief communication interruption during the handover procedure. The interruption may, for example, be in the range 30-60 ms, or considerably longer (e.g., up to 100 ms, or up to several hundreds of ms, such as 200 ms, 500 ms, or 900 ms).

For MBB services and voice services, these handover interruptions typically do not negatively affect the quality of the services, since the latency caused by the interrupt can be hidden with buffer management. For latency sensitive services, however, the length of these handover interruptions may be in the same order of magnitude as the latency requirements of the service, and a handover can negatively affect the quality of the service.

Hence, some approaches for latency control may comprise avoiding unnecessary handovers, at least for latency sensitive services, while performing handovers that are necessary to maintain connection between the communication network and a device operating at the communication end point.

Alternatively or additionally, some approaches for latency control may comprise controlling the setting of one or more network configuration parameter, at least for latency sensitive services.

Generally, there are many network configuration parameters that potentially impact the latency of a communication network. Examples include: the scheduling request periodicity (for UE initiated transmissions), the coding and modulation selected for HARQ retransmissions, the maximum number of HARQ retransmissions, timer settings in medium access control (MAC), timer settings in radio link control (RLC).

For MBB services and voice services, the setting of these configuration parameters typically have negligible impact on the user experience, since any un-acceptable latency jitter can be hidden with buffer management. For latency sensitive services, however, the setting of these configuration parameters can have a negative effect on the user experience since they might affect the variation in latency and/or the maximum latency.

Hence, some approaches for latency control may comprise controlling the setting of one or more network configuration parameter, at least for latency sensitive services, to provide latencies which are predictable (i.e., low variation in latency) and relatively low (i.e., low maximum latency).

Generally, some approaches for latency control may comprise keeping latency predictable and relatively low (bounded and predictable), while (preferably) enabling maintenance of the communication connection through the communication network at a predictable throughput. Thereby, latency sensitive services can be satisfactorily supported in the communication network.

Alternatively or additionally, some approaches for latency control may comprise, at least for latency sensitive services, informing the application about current and/or future conditions of the communication network that impact throughput and/or latency.

For example, when the application receives information that the throughput of the communication network throughput is decreasing, or predicted to decrease in a near future, the application can adapt to this situation. Example adaptions by the application include lowering of a data rate (e.g., by lowering an encoder rate, such as a video encoding rate).

Some communication networks already have approaches for differentiating services in RAN, which may be used for differentiation also in relation to latency sensitive services as defined herein. In some embodiments, such approaches may be combined with the alternative approaches for latency control presented herein.

Examples of already existing approaches for differentiating services in RAN include slicing, dedicated bearers, resource assignment differentiation, scheduling prioritization, etc. For example, some legacy solutions allow an operator to assign more or less resources and/or set a priority for a bearer that transport a specific service type (e.g., voice over LTE, VoLTE). Such approaches may comprise assigning different service class identifiers (e.g., quality-of-service class identifier - QCI, 5QI, etc.) to different bearers based on which type of service is carried by the bearer. Alternatively or additionally, some legacy solutions allow an operator to enable different types of services based on which type of subscription is associated with a user device.

Figure 2 schematically illustrates a communication scenario with differentiated bearers. The user device 30a communicates with an application dwelling in the Internet 40A via the communication network 20', using a bearer 91. The user device 30b communicates with an application associated with a latency sensitive service via the communication network 20', using another bearer 92. To reduce end-to-end latency, the application dwells in a cloud edge 40B. The user device 30c communicates with an application dwelling in the Internet 40A using the bearer 91, as well as with an application associated with a latency sensitive service dwelling in the cloud edge 40B using the bearer 92.

The different bearers 91, 92 may be differentiated to provide different latency characteristics as exemplified above, using any suitable latency approach (e.g., any of the alternative approaches for latency control described herein).

As mentioned above, alternative approaches for latency control are provided by this disclosure. Some embodiments of the approaches for latency control address the problems associated with latency sensitive services (i.e., services with a sensitive relationship between latency requirements on the communication between the end points and the internal latency performance of the communication network).

A possible principle for alternative approaches for latency control is to improve the internal latency performance of the communication network (e.g., decreasing the maximum duration of transfer through the communication network, and/or decreasing the average duration of transfer through the communication network, and/or decreasing the variance of duration of transfer through the communication network, etc.). This may, for example, be achieved by avoiding unnecessary handovers and/or by controlling the setting of one or more network configuration parameter.

Another possible principle for alternative approaches for latency control is to dynamically vary the utilization of the communication network by the service in view of the latency requirements on the communication between the end points. For example, temporarily (when the internal latency performance of the communication network is poor) lowering a communication rate that the service applies in the communication network may temporarily improve the internal latency performance of the communication network (e.g., due to less HARQ retransmissions, etc.) at the cost of reduced throughput. The latter may be mitigated by temporary buffer build-up (compare e.g., with 31 and 42 of Figure 1) within the boundaries set by latency requirements on the communication between the end points. This may, for example, be achieved by informing the application about current and/or future conditions of the communication network to allow the application to adjust its data rate.

The above possible principles may be used alone or in combination.

In some embodiments, the above possible principles are used exclusively for latency sensitive services, or only for communication end points associated with a latency sensitive service.

In the following, embodiments will be described where alternative approaches for latency control are provided. Some embodiments are particularly suitable for latency control in situations as that described in connection with Figure 1. Furthermore, some embodiments apply the principle to dynamically vary the utilization of the communication network by the service. This is a form of latency control is also termed latency management, and provides accommodation of latency variations of the communication network.

In some embodiments the dynamic variation of the utilization of the communication network by the service is achieved by lowering a communication rate that the service applies (entailing a quality reduction) and/or by increasing a packet pacing rate within communication frame (thereby spreading the plurality of packets non-uniformly within the communication frame). Generally, it should be noted that - even though embodiments are exemplified herein in the context of latency control - some embodiments may be equally applicable is any context where communication interruptions need to be handled.

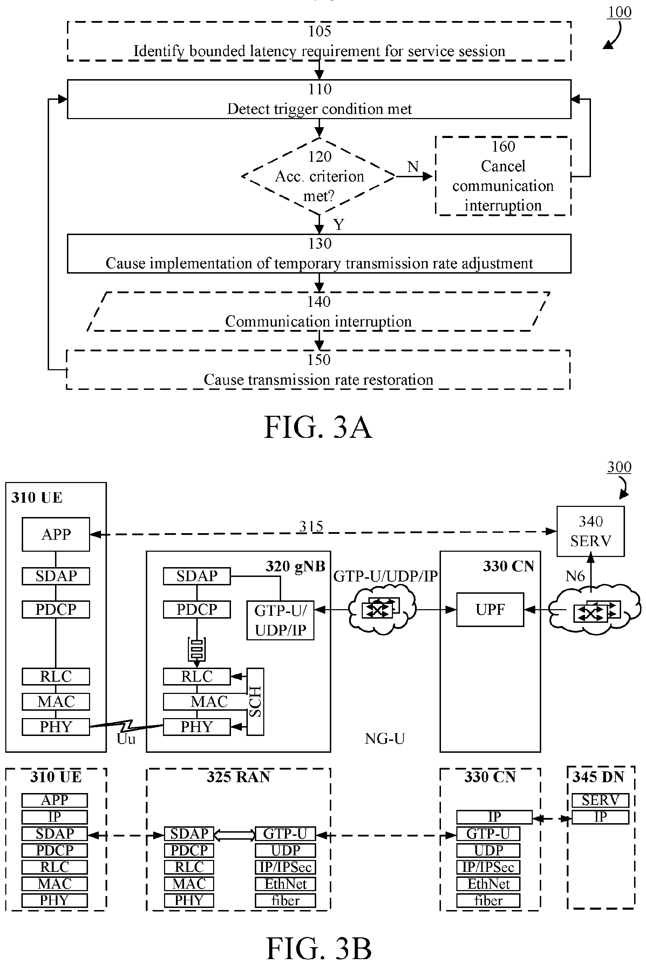

Figure 3A illustrates an example method 100 according to some exemplary embodiments. The method is for a radio access network control node operating in a communication network having an associated (e.g., registered and/or served) user device, wherein the user device has an ongoing application service session with an application server via the communication network. For example, the method may be for handling communication interruptions and/or for latency control in a communication network.

Generally, latency control may refer to one or more of: mitigation of latency spikes, reduction/decrease of latency variance/variation associated with the communication network for the user device, reduction/decrease of average latency associated with the communication network for the user device, reduction/decrease of the probability for (i.e., number - e.g., per time unit - of) latency events associated with the communication network for the user device that exceed a latency threshold value, reduction/decrease of a maximum latency associated with the communication network for the user device, or any other suitable change in latency behavior.

A user device may, for example, comprise one of the communication end points 30, 40 of Figure 1, one of the user devices 30a, 30b, 30c of Figure 2, a user equipment (UE), a station (STA), or similar.

Also generally, latency control may be for mitigation of latency variations and/or for providing predictable latency and/or for providing reliable communication.

In typical embodiments, the latency control is performed under a throughput condition (e.g., that throughput should be kept at, or above, a minimum acceptable throughput).

The application service session may be for a service wherein a deviation between a latency requirement of the service and an internal latency performance of the communication network is bounded (e.g., a latency sensitive service), as elaborated on above.

Alternatively or additionally, the application service session may be a real-time streaming application (e.g., a gaming application, an augmented reality application, a virtual reality application, a tele-operated vehicle control application, a real-time video transfer application, etc.).

In typical embodiments, the application service session has a variable transmission rate; dynamically controllable by explicit or implicit commands to the application server and/or to an application client of the user device.

As illustrated by step 110, the method comprises detecting that a trigger condition is met for the user device. The trigger condition indicates an upcoming communication interruption in relation to the application service session. An example of a communication interruption is a measurement gap (e.g., enabling the user device to perform measurements for other frequencies than the frequency currently used for communication; i.e., inter-frequency measurements). Another example of a communication interruption is an interruption due to handover of the user device.

Detecting that the trigger condition is met may be implemented in any suitable way. For example, step 110 may comprise receiving a signal from another node (e.g., from another network node or from the user device) indicating and/or requesting an upcoming communication interruption. Alternatively or additionally, step 110 may comprise determining that there is a need for a communication interruption.

The method also comprises causing implementation of a temporary transmission rate adjustment of the application service session, as illustrated by step 130. Step 130 may be performed in response to step 110 according to some embodiments. The temporary transmission rate adjustment provides a radio access channel margin accommodating the upcoming communication interruption. Thereby, latency control may be achieved.

Causing implementation of the temporary transmission rate adjustment may be implemented in any suitable way. For example, step 130 may comprise transmitting (or cause transmission - from another node - of) a rate adjustment command to the user device and/or the application server.

When the communication interruption - illustrated by optional event 140 - has elapsed (i.e., after the communication interruption), the method may comprise causing transmission rate restoration, as illustrated by optional step 150. Transmission rate restoration may, for example, comprise implementing a transmission rate re-adjustment to the transmission rate used before step 110.

Causing transmission rate restoration may be implemented in any suitable way. For example, step 150 may comprise transmitting (or cause transmission - from another node - of) a rate re-adjustment command to the user device and/or the application server.

A determination that the communication interruption has elapsed may be performed using any suitable approach; e.g., based on internal/external measurements and/or based on a timer.

In some exemplary embodiments, the method comprises (e.g., directly after step 110) determining whether the (prospect) transmission rate adjustment meets an accommodation criterion relative the upcoming communication interruption, as illustrated by optional step 120.

When the accommodation criterion is met (Y-path out of step 120), the method proceeds to step 130 for causing the temporary transmission rate adjustment; responsive to the accommodation criterion being met. When the accommodation criterion is not met (N-path out of step 120), the method may comprise cancelling the upcoming communication interruption instead of causing the temporary transmission rate adjustment, as illustrated by optional step 160.

The accommodation criterion may be any suitable criterion that specifies whether, and/or to what extent, the (prospect) transmission rate adjustment can accommodate the upcoming communication interruption (e.g., provide a time duration for the upcoming communication interruption while maintaining acceptable service quality). Alternatively or additionally, the accommodation criterion may specify whether, and/or to what extent, a transmission rate adjustment is currently possible for the service session (e.g., if it is possible to lower the service quality and/or if communication resources needed for the rate adjustment are available).

In some embodiments, another example method is provided for a radio access network control node operating in a communication network having an associated user device, wherein the user device has an ongoing application service session with an application server via the communication network. This example method proceeds directly from a step corresponding to step 110 to a step corresponding to step 160, and steps corresponding to steps 120, 130, 140, 150 are not present.

One approach to enable cancellation of measurement gaps for a user device having an ongoing application service session (e.g., for a latency sensitive service) is to configure the network to move other user devices to be served on other frequency bands, particularly when there is a cell overload. Thereby, the user device with the latency sensitive service does not need to perform measurements for load balancing (measurements for mobility may still need to be performed, as applicable). This approach is similar to load balancing as known in the art, but is (further) based on differentiation related to services associated with user devices.

Thus, when the user device and one or more other user devices are served by a same cell, the method may further comprise causing handover of at least one of the other user devices when the cell has a load which exceeds a threshold value.

In any case, the method(s) may further comprise identifying that the application service session is for a service wherein a deviation between a latency requirement of the service and an internal latency performance of the communication network is bounded, as illustrated by optional step 105. The method(s) may be performed only for such application service sessions according to some embodiments.

Thus, in step 105, it is identified that a service is currently associated with a user device - the user device in turn being associated with (e.g., served by) the communication network - wherein the service has bounded deviation between a latency requirement of the service and an internal latency performance of the communication network.

That a service is associated with a user device may, for example, include that part of a service application (e.g., an application client) is running on the user device.

The service may be the type of service elaborated on above - a service which relates to the communication network such that the latency requirements enforced by the service on the communication between the end points are not impossible, but not easy either, to accommodate by the internal latency performance of the communication network. This type of service is also referred to herein as latency sensitive services. This type of relationship between the service and the communication network is referred to herein by specifying that the deviation between a latency requirement of the service and an internal latency performance of the communication network is bounded.

One example that substantiates the bounded deviation between the latency requirement of the service and the internal latency performance of the communication network is that a ratio between a latency requirement parameter value of the service and an internal latency performance parameter value of the communication network falls within a bounding range (e.g., does not exceed a bounding threshold). The bounding range may have any suitable value and/or may be dynamic or static.

Alternatively or additionally, one example that substantiates the bounded deviation between the latency requirement of the service and the internal latency performance of the communication network is that a latency requirement parameter value of the service and an internal latency performance parameter value of the communication network are in a same order of magnitude. For example, the same order of magnitude may be defined as not deviating more than a factor, e.g., 2, 5, or 10.

Alternatively or additionally, one example that substantiates the bounded deviation between the latency requirement of the service and the internal latency performance of the communication network is that a latency requirement parameter value of the service and an internal latency performance parameter value of the communication network are equal.

Alternatively or additionally, one example that substantiates the bounded deviation between the latency requirement of the service and the internal latency performance of the communication network is that a required end-to-end round-trip-time of the service falls within a time range specified relative an internal round-trip-time of the communication network.

The latency requirement parameter may, for example, refer to one or more of: latency variation, latency average, probability for latencies above a threshold value, maximum latency, or any other suitable latency metric. The internal latency performance parameter may, for example, be a corresponding parameter of the communication network (i.e., latency variation, latency average, probability for latencies above a threshold value, maximum latency, or any other suitable latency metric).

For 3GPP-based communication networks, the service might, for example, be a service which has a maximum allowable latency which is lower than that of mobile broadband (MBB) services and/or higher than that of ultra-reliable low latency communication (URLLC) services; or correspondingly for any other suitable latency requirement parameter.

The identification in step 105, that a service with bounded deviation between the latency requirement of the service and the internal latency performance of the communication network is currently associated with a user device, may be performed in any suitable way. Some illustrative examples include detecting that a service class identifier is indicative of the service, detecting that a bearer dedicated for low latency requirements is assigned for the service, detecting that single network slice selection assistance information (S-NSSAI) is indicative of the service, and/or determining that a traffic pattern of the service matches a latency sensitive traffic pattern.

As indicated above, some typical communication networks are dimensioned and configured to provide service for MBB traffic. Although latency is considered in MBB-oriented networks - especially in relation to Transmission Control Protocol (TCP) throughput and ramp-up times - predictable latency is typically not required, since timing requirements in human-machine interaction for, e.g., web-browsing or (non-real-time) video streaming is quite relaxed and large latency variations may be hidden with large buffers.

Latency sensitive services on the other hand can typically not function well with large buffers due to the nature of the applications (e.g., quick reaction required in gaming or autonomous driving). This means that any latency spike (e.g., intermittent long packet delays) may have a negative impact on the application experience. Some work has been done (e.g., in Third Generation Partnership Project, 3GPP, standards) with an aim to reduce the overall latency. However, such work has generally not addressed variations in latency. The configuration parameters are typically rather tuned and set to optimize resource utilization and network capacity; satisfying MBB traffic but not meeting requirements for latency sensitive services. Many latency sensitive service use cases do not have extreme requirements regarding low latency, and can cope quite well with latency variations as long as they are predictable and not too large. This type of latency behaviour (bounded and predictable) is not so important for MBB traffic performance and has generally not been considered in network configuration or methods used for data transfer. Contrarily, many methods and protocols are typically designed and configured to guarantee data delivery; achieved using retransmission mechanisms on different levels to minimize packet loss, which mechanisms may imply sudden latency spikes due to a halted data flow.

A general aim of some embodiments presented herein (e.g., the method 100 as described in connection with Figure 3A) is to provide approaches to accommodate latency sensitive services in MBB-oriented communication networks. Particularly, this may be achieved by approaches for handling of communication interruptions.

To handle User Equipment (UE) mobility and/or network load balancing, the network typically requests that UEs perform neighbor cell measurements. The neighbor cell measurements may be intra-band (performed for a frequency in the same band as the frequency currently used for communication) or inter-band (performed for a frequency in another band than the frequency currently used for communication). In the latter case, the UE may need to interrupt data communication on the serving cell frequency and tune its radio to the frequency of another cell; in another band. To facilitate this procedure, the network may create measurement gaps for the serving cell to enable the UE measurements on a different frequency.

The UE measurement reports are used by the mobility control and/or load balancing function(s) of the network for, e.g., taking UE handover decisions. Neighbor cell measurements (at least inter-band) and handover each implies a communication interruption (e.g., due to an interrupt in the connection), which typically affects latency sensitive services.

To reduce the number of handovers and/or the number of neighbor cell measurements, the network may use specific settings for measurements and/or handover decisions in relation to UEs with latency sensitive services. However, there may still be scenarios where measurements and/or handover need to be performed to maintain connectivity. Some embodiments presented herein (e.g., the method 100 as described in connection with Figure 3A) provide approaches that are suitable for such scenarios.

Figure 3B schematically illustrates an example system model 300 according to some embodiments, in which a latency sensitive service is using a fifth generation (5G) communication network for connectivity between an application (APP) of the user device and the application server. The user device is represented by a user equipment (UE) 310 and the application server is represented by a server (SERV) 340 residing in a data network (DN) 345.

Also exemplified in Figure 3B are well known components related to communication stacks for the example system model 300; IP (Internet Protocol), SDAP (Service Data Adaptation Protocol), PDCP (Packet Data Convergence Protocol), RLC (Radio Link Control), MAC (Medium Access Control), PHY (PHYsical layer), SCH (SCHeduler), GTP-U (General Packet Radio Service, GPRS, Tunneling Protocol-User plane), UDP (User Datagram Protocol), UPF (User Plane Function), IP/IPSec (IP Security), and EthNet (Ethernet).

As illustrated in Figure 3B, there is a wireless connection (Uu) between the UE and a radio access node (represented by a gNB 320) in the Radio Access Network (RAN) 325, and a fiber backhaul link (NG-U; user plane interface between Next Generation Radio Access Network, NG-RAN, and Fifth Generation Core, 5GC) between the gNB and the 5G Core Network (CN) 330 which may pass a network of switches and routers. Similarly, the connection between the CN and the application server may be implemented by a fiber link (N6; reference point between UPF and data network) which may pass a network of switches and routers.

The application data communicated between the application of the UE 310 and the server 340 passes the core network and the radio access network as illustrated by 315 (e.g., using Internet Protocol, IP). For performance reasons, both the CN as well as the application server may be deployed near the RAN (Edge deployment) to minimize delays from switches and routers as well as propagation delays in the transport media due to long distance between RAN node and application server.

The protocol stacks of Figure 3B indicate IP connectivity between the UE application and the server, where the IP layer (together with some transport layer; such TCP or UDP) provides transport of data between the application end points.

Latency sensitive (e.g., real-time) services produce and consume data in a certain pace depending on type of service. From end-to-end latency point of view, the system must secure that the IP packets can be processed and delivered in a pace that fulfills the application level demands. An aim of some embodiments is to contribute to that requirement; particularly by handling of communication interruptions in the wireless connection between the user device and the radio access node.

According to some exemplary embodiments, the network sees to that the data flow is adjusted such that the latency requirements for the service can be fulfilled when communication interruptions (e.g., measurement gaps) occur for the serving radio link. Triggering of the functionality may depend on latency demands for a specific service data flow.

A coordination may be applied between inter-frequency measurement handling and latency sensitive data transfer functionality to avoid and/or reduce impact on latency sensitive services. In a first approach, a packet pacing rate is increased to create margins for the latency sensitive service, in which measurement gaps can be accommodated. In a second approach, a quality of the latency sensitive service is temporarily reduced (e.g., lowering a video frame rate) to create margins for the latency sensitive services, in which measurement gaps can be accommodated. In a third approach, inter-frequency measurements are not performed (e.g., the network is not scheduling any measurement gaps) for a UE with a latency sensitive service. Two or more of these first, second, and third approaches may be combined as suitable. The approaches may be applied per UE and/or may be activated (only) for applicable service types (e.g., latency sensitive services, services with a certain quality-of-service profile, and/or services using a certain dedicated bearer).

Thus, improved accommodation of latency sensitive services is enabled in multi-frequency deployments; e.g., by adapting the service based on network conditions and/or by avoiding inter-frequency operations for UEs with active latency sensitive services.

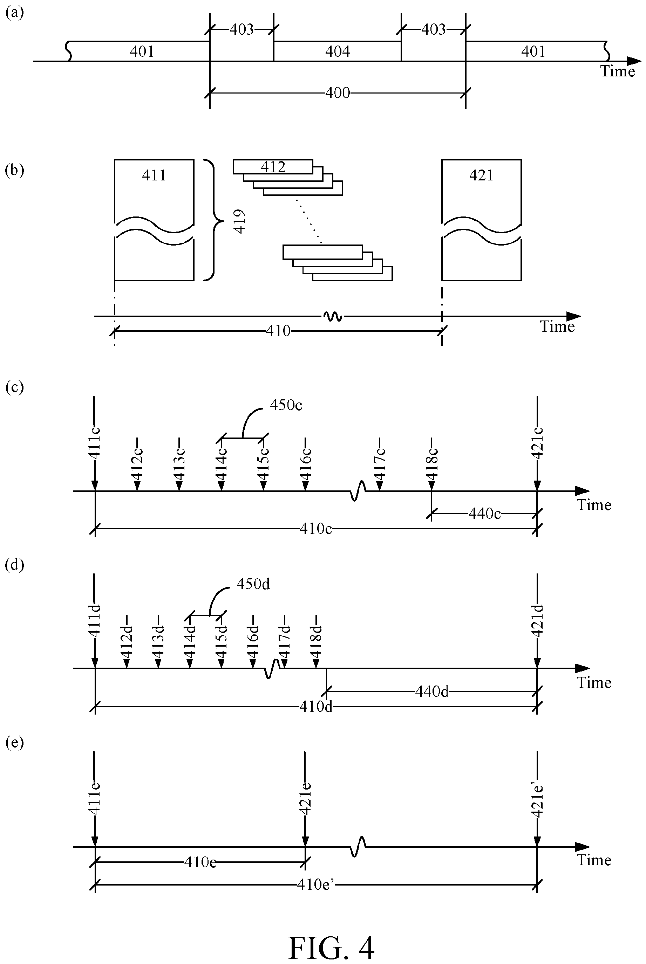

Figure 4 is a collection of timing diagrams (a)-(e) illustrating example approaches according to some exemplary embodiments.

Timing diagram (a) exemplifies a communication interruption in the form of a measurement gap 400. Before and after the measurement gap 400, communication is ongoing between the user device and the radio access node (e.g., using a serving cell with a first frequency) as illustrated by 401. During the measurement gap 400, the communication 401 between the user device and the radio access node is interrupted. After a transition time 403 (during which the user device can change receiver settings from the first frequency to a second frequency), the user device can perform measurements for the second frequency (e.g., inter-band measurements) as illustrated by 404. In the end of the measurement gap 400, another transition time 403 is provided (during which the user device can change receiver settings from the second frequency to the first frequency).

Timing diagram (b) exemplifies communication for an application service in the form of a real-time video streaming application, in which frames 411, 421 are to be consumed at a rate defined by an inter-frame time 410. A segmentation 419 of the video data of each frame 411 provides a plurality of (IP) packets 412; all of which should be communicated during the inter-frame time 410 for the corresponding frame 411. Typically, all packets need to be delivered to re-create the frame at the receiver. Also typically, the number of packets within a frame may be static/predetermined or dynamic/variable; depending on application specifics.

Generally, latency sensitive (real-time) services produce and consume data at a certain pace depending on type of service. Timing diagram (b) provides one example thereof. For example, the frame rate (i.e., the inter-frame time 410) may be specified by video quality.

As already implied, there is typically an end-to-end feedback loop between the application server and the application of the user device, which puts latency demands on all links of the connection. To avoid buffer overflow in transport network switches, the segmented IP packets from the video frames are sent at an even pace with a margin to digest short additional transport delays as well as to cater for potential retransmissions in the radio interface. Thus, there is typically some extra time available between the last IP packet and the beginning of the subsequent frame.

Timing diagram (c) exemplifies the communication of packets 412c, 413c, 414c, 415c, 416c, 417c, 418c (compare with 412) of a frame 411c (compare with 411) within an inter-frame time 410c (compare with 410). As can be seen, the plurality of packets are equally-distantly communicated within the inter-frame time 410c at a certain pace (an in-frame packet rate) defined by the time 450c between subsequent packets. When all packets have been communicated, there is a margin time 440c before the subsequent frame 421c.

Generally, the application service session may comprise a frame structure according to which a predetermined plurality of packets is transmitted within each frame. Timing diagram (c) provides one example thereof.

Timing diagram (d) exemplifies the communication of packets 412d, 413d, 414d, 415d, 416d, 417d, 418d (compare with 412 and 412c, 413c, 414c, 415c, 416c, 417c, 418c) of a frame 411d (compare with 411 and 411c) within an inter-frame time 410d (compare with 410 and 410c). As can be seen, the plurality of packets are equally-distantly communicated within the inter-frame time 410d at a certain pace (an in-frame packet rate) defined by the time 450d between subsequent packets. When all packets have been communicated, there is a margin time 440d before the subsequent frame 421d.

The in-frame packet rate is increased in timing diagram (d) compared to timing diagram (c), i.e., the time 450d between subsequent packets is shorter than the time 450c between subsequent packets. When the number of packets in a frame is fixed (i.e., static/predetermined), this results in that the margin time 440d becomes longer than the margin time 440c. Such an increase in margin time may enable accommodation of a communication interruption within the margin time 440d.

Generally, the temporary transmission rate adjustment may comprise increasing an in-frame packet rate. Timing diagram (d) provides one example thereof, and may be a representation of the first approach mentioned above.

Timing diagram (e) exemplifies variation of the inter-frame time 410e, 410e' (compare with 410, 410c, 410d) between frames. Thus, the inter-frame time for a frame 411e may be a relatively short (e.g., default) inter-frame time 410e before the subsequent frame 421e, or a relatively long inter-frame time 410e' before a subsequent frame 421e'. For example, the relatively short inter-frame time 410e may correspond to high service quality (e.g., high resolution video) and the relatively long inter-frame time 410e' may correspond to low service quality (e.g., low resolution video). Using the relatively long inter-frame time 410e' may enable accommodation of a communication interruption within the inter-frame time 410e'.

Generally, the temporary transmission rate adjustment may comprise decreasing a frame rate (which may in turn comprise decreasing a quality of the application service). Timing diagram (e) provides one example thereof, and may be a representation of the second approach mentioned above.

It should be noted that the approaches general presented in relation to timing diagrams (d) and (e) may be combined according to some embodiments.

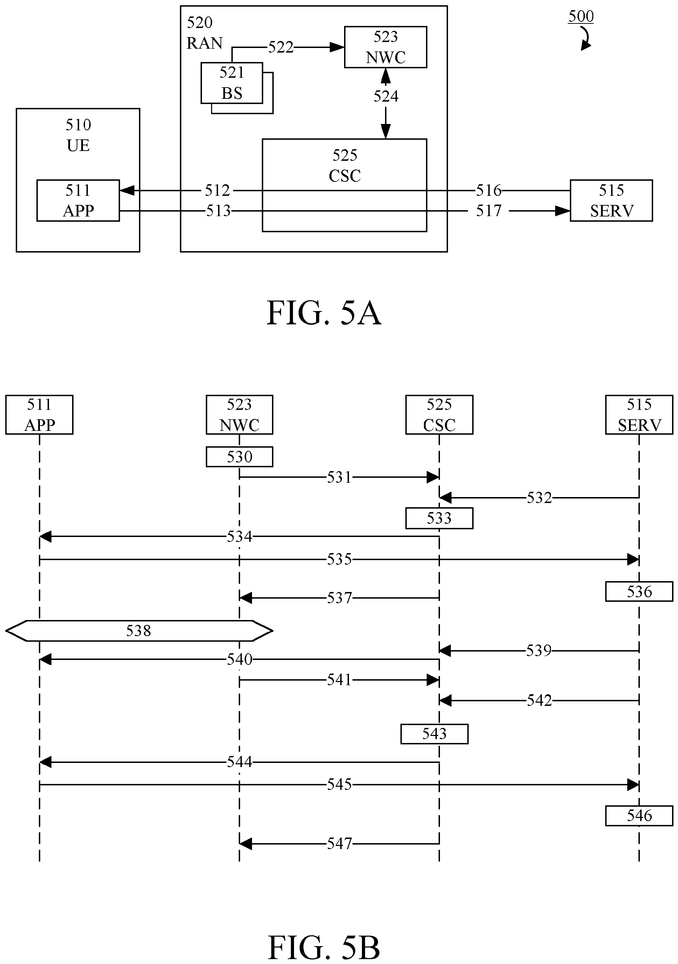

Figures 5A and 5B schematically illustrate an example system model 500 (Figure 5A) and a corresponding example signaling diagram (Figure 5B) according to some exemplary embodiments.

In analogy with what has been exemplified earlier herein, the system model 500 comprises an application (APP) 511 in a UE 510, with a connection to an application server (SERV) 515 established via a radio access network (RAN) 520.

In the RAN (e.g., in a radio access network control node, such as a base station or a central network node), there is a Congestion Supervision and Control (CSC) 525 function monitoring the data flow (e.g., queue build-up).

A network control (NWC) 523 function is also provided in the RAN. The NWC may have information regarding one or more of the following: cell level location for each UE, current active service categories for each UE (e.g., MBB or LSS), cell load, and other cell statistics. One or more of these types of information may be acquired from base station(s) (BS) 521 of the RAN as illustrated by 522.

The CSC and the NWC may be localized in the same, or different, network nodes. Furthermore, each of the CSC and the NWC may be localized in a single network node or may be distributed among two or more network nodes.

As illustrated by 524, the NWC may communicate with the CSC to request adjustments of the service data flow for a specific UE (as described previously; e.g., quality adaptation and/or modification of the packet pacing rate) when a triggering condition indicating an upcoming communication interruption is detected.

The CSC may communicate with the server and/or the UE (e.g., using embedded control markings in the packet header in the data flows of the service). Thus, a service data flow 516 from the server to the UE may become a modified service data flow 512 after passing the CSC, enabling the CSC to provide information or commands to the UE. Alternatively or additionally, a feedback data flow 513 from the UE to the server may become a modified feedback data flow 517 after passing the CSC, enabling the CSC to provide information or commands to the application server.

As illustrated by 530 of the signalling diagram of Figure 5B, the NWC detects that there is an upcoming communication interruption (compare with step 110 of Figure 3); e.g., identifies that inter-frequency measurements are required for a the LSS UE.

The NWC instructs 531 the CSC to cause a temporary transmission rate adjustment (e.g., an increase in packet pacing rate and/or a decrease in frame rate) for the service relating to the UE (compare with step 130 of Figure 3).

When application service data 532 arrives at the CSC (compare with 516), the CSC adds a command indicative of the transmission rate adjustment to the data (e.g., by injecting a command in the packet header), as illustrated by 533 (compare with step 130 of Figure 3). Then, the CSC forwards the application service data with the command 534 to the UE (compare with 512).

The UE identifies the command, the feedback 535 from the UE to the server (compare with 513, 517) indicates the transmission rate adjustment to the server, and the server adjusts the transmission rate (e.g., increases the packet pacing rate and/or a decreases the frame rate) for the UE application service accordingly, as illustrated by 536.

When the transmission rate adjustment is registered by the CSC it informs the NWC thereof as illustrated by 537. Then, the communication interruption can be allowed (compare with event 140 of Figure 3; e.g., inter-frequency measurements 538 may be performed) while application service data 539, 540 uses the adjusted transmission rate.

After the communication interruption, the NWC instructs 541 the CSC to cause a transmission rate restoration (e.g., a decrease in packet pacing rate and/or an increase in frame rate, to a default mode) for the service relating to the UE (compare with step 150 of Figure 3).

When application service data 542 arrives at the CSC (compare with 516), the CSC adds a command indicative of the transmission rate restoration to the data (e.g., by injecting a command to the packet header), as illustrated by 543 (compare with step 150 of Figure 3). Then, the CSC forwards the application service data with the command 544 to the UE (compare with 512).

The UE identifies the command, the feedback 545 from the UE to the server (compare with 513, 517) indicates the transmission rate adjustment, and the server restores the transmission rate (e.g., decreases the packet pacing rate and/or increases the frame rate) for the UE application service accordingly, as illustrated by 546.

When the transmission rate restoration is registered by the CSC it informs the NWC thereof as illustrated by 547.

In a method for a user device having an ongoing application service session with an application server via a communication network, the signaling 534 may be seen as the user device receiving a user device adjustment command from the application server (here via the CSC) or a radio access network control node (e.g., comprising the CSC) operating in the communication network. Since the user device adjustment command 534 is indicative of the transmission rate adjustment, it is indirectly indicative of a trigger condition being met for the user device, the trigger condition indicating an upcoming communication interruption 538 in relation to the application service session.

In the method for a user device having an ongoing application service session with an application server via a communication network, the signaling 535 may be seen as the user device causing implementation of a temporary transmission rate adjustment 536 of the application service session by transmitting an application server adjustment command to the application server, wherein the temporary transmission rate adjustment provides a radio access channel margin accommodating the upcoming communication interruption.

In a method for an application server having an ongoing application service session with a user device via a communication network, the signaling 535 may be seen as the application server receiving an application server adjustment command from the user device (here via the CSC) or a radio access network control node (e.g., comprising the CSC) operating in the communication network. Since the application server adjustment command 535 indicates the transmission rate adjustment, it is indirectly indicative of a trigger condition being met for the user device, the trigger condition indicating an upcoming communication interruption 538 in relation to the application service session.

In the method for an application server having an ongoing application service session with a user device via a communication network, the step 536 may be seen as the application server implementing a temporary transmission rate adjustment of the application service session, wherein the temporary transmission rate adjustment provides a radio access channel margin accommodating the upcoming communication interruption.

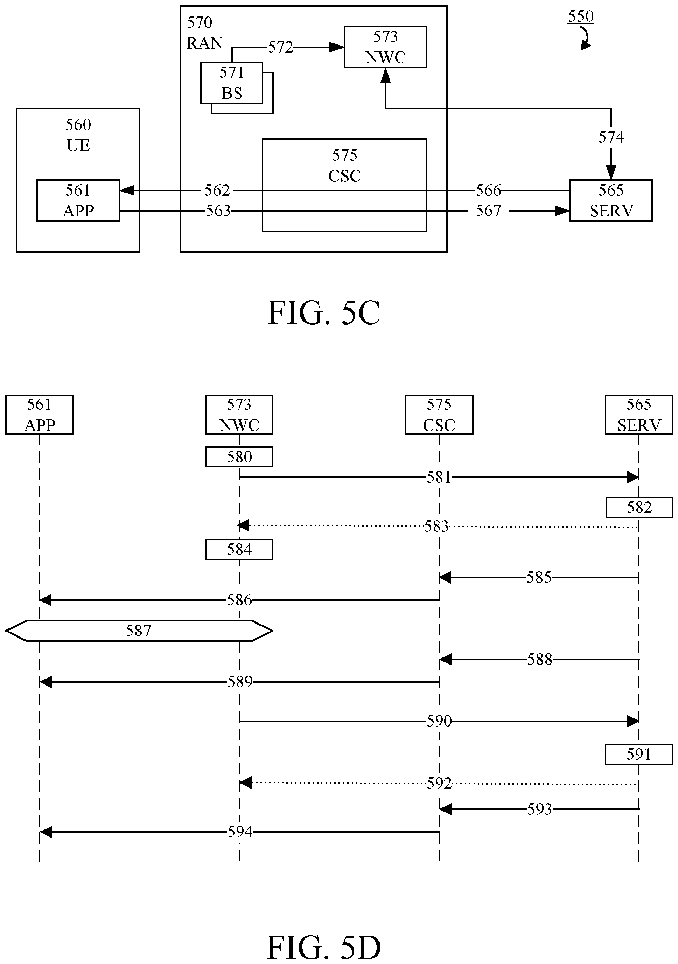

Figures 5C and 5D schematically illustrates an example system model 550 (Figure 5C) and a corresponding example signaling diagram (Figure 5D) according to some exemplary embodiments.

In analogy with what has been exemplified earlier herein, the system model 550 comprises an application (APP) 561 in a UE 560, with a connection to an application server (SERV) 565 established via a radio access network (RAN) 570.

In the RAN (e.g., in a radio access network control node, such as a base station or a central network node), there is a Congestion Supervision and Control (CSC) 575 function monitoring the data flow (e.g., queue build-up).

A network control (NWC) 573 function is also provided in the RAN. The NWC may have information regarding one or more of the following: cell level location for each UE, current active service categories for each UE (e.g., MBB or LSS), cell load, and other cell statistics. One or more of these types of information may be acquired from base station(s) (BS) 571 of the RAN as illustrated by 572.

The CSC and the NWC may be localized in the same, or different, network nodes. Furthermore, each of the CSC and the NWC may be localized in a single network node or may be distributed among two or more network nodes.

As illustrated by 574, the NWC may communicate directly with the application server 565 (e.g., via an application programming interface) API to request adjustments of the service data flow for a specific UE (as described previously; e.g., quality adaptation and/or modification of the packet pacing rate) when a triggering condition indicating an upcoming communication interruption is detected.

In these embodiments, the CSC may merely relay and monitor data between the server and the UE. Thus, a service data flow 566 from the server to the UE may be identical to a service data flow 562 after passing the CSC, and a feedback data flow 563 from the UE to the server may be identical to a feedback data flow 567 after passing the CSC.

As illustrated by 580 of the signalling diagram of Figure 5D, the NWC detects that there is an upcoming communication interruption (compare with step 110 of Figure 3); e.g., identifies that inter-frequency measurements are required for a the LSS UE.

The NWC instructs 581 the server to implement a temporary transmission rate adjustment (e.g., an increase in packet pacing rate and/or a decrease in frame rate) for the service relating to the UE (compare with step 130 of Figure 3), and the server adjusts the transmission rate (e.g., increases the packet pacing rate and/or decreases the frame rate) for the UE application service accordingly, as illustrated by 582.

When the transmission rate adjustment is completed by the server, it may inform the NWC thereof as illustrated by 583. Then, the NWC determines 584 that the communication interruption can be allowed (compare with event 140 of Figure 3; e.g., inter-frequency measurements 587 may be performed) while application service data 585, 586, 588, 589 uses the adjusted transmission rate.

After the communication interruption, the NWC instructs 590 the server to implement a transmission rate restoration (e.g., a decrease in packet pacing rate and/or an increase in frame rate, to a default mode) for the service relating to the UE (compare with step 150 of Figure 3), and the server restores the transmission rate (e.g., decreases the packet pacing rate and/or increases the frame rate) for the UE application service accordingly, as illustrated by 591.

When the transmission rate restoration is completed by the server, it may inform the NWC thereof as illustrated by 592, and application service data 593, 594 uses the restored transmission rate.

In a method for an application server having an ongoing application service session with a user device via a communication network, the signaling 581 may be seen as the application server receiving an application server adjustment command from a radio access network control node (e.g., comprising the NWC) operating in the communication network. Since the application server adjustment command 581 indicates the transmission rate adjustment, it is indirectly indicative of a trigger condition being met for the user device, the trigger condition indicating an upcoming communication interruption 587 in relation to the application service session.

In the method for an application server having an ongoing application service session with a user device via a communication network, the step 582 may be seen as the application server implementing a temporary transmission rate adjustment of the application service session, wherein the temporary transmission rate adjustment provides a radio access channel margin accommodating the upcoming communication interruption.

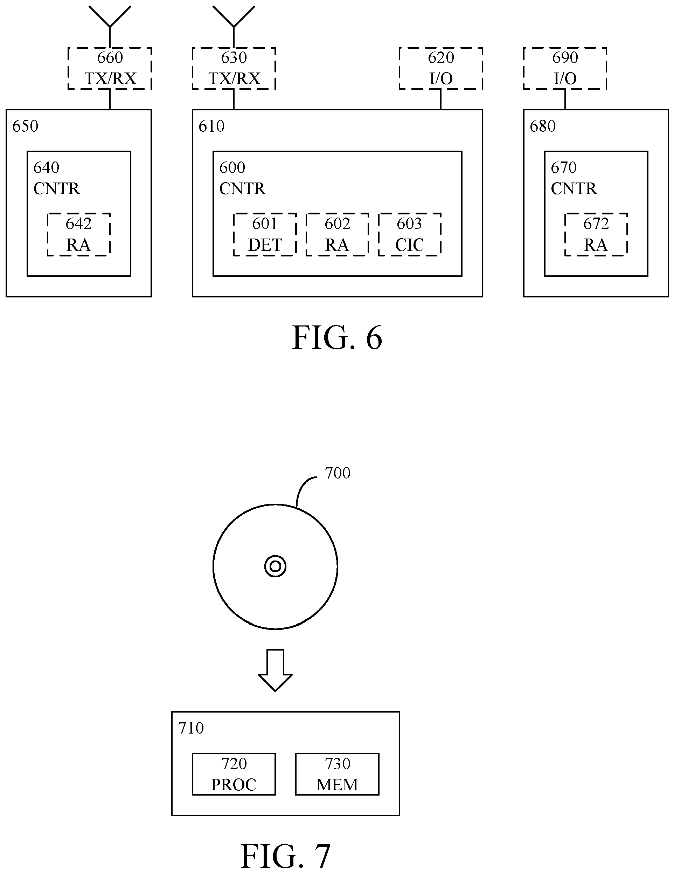

Figure 6 schematically illustrates three example apparatuses 610, 650, 680 according to some embodiments. The example arrangement are for a scenario with a radio access network control node operating in a communication network having an associated user device, wherein the user device has an ongoing application service session with an application server via the communication network.

The apparatus 610 may, for example, be comprisable (e.g., comprised) in a radio access network control node (e.g., a radio access node such as a base station, or a central processing node). Alternatively or additionally, the apparatus 610 may be configured to cause execution of one or more of the method steps described herein (e.g., in connection with any of Figures 3, 5A and 5B). The apparatus comprises a controller (CNTR; e.g., controlling circuitry or a control module) 600.

The controller 600 is configured to cause detection of that a trigger condition is met for the user device, the trigger condition indicating an upcoming communication interruption in relation to the application service session (compare with step 110 of Figure 3).

To this end, the controller 600 may comprise, or be otherwise associated with (e.g., connected, or connectable, to) a detector (DET; e.g., detecting circuitry or a detection module) 601. The detector may be configured to detect that the trigger condition is met for the user device.

When the detection of that the trigger condition is met comprises reception of a signal indicative of the upcoming communication interruption, such reception may be via a wireless transceiver (TX/RX; e.g., transceiving circuitry or a transceiver module) 630 associated with (e.g., connected, or connectable, to) the controller and/or via a wired interface (I/O; e.g., interfacing circuitry or an interface module) 620 associated with (e.g., connected, or connectable, to) the controller.

When the detection of that the trigger condition is met comprises determination of a need for the upcoming communication interruption, such determination may be performed by a determiner (e.g., determination circuitry or a determination module) associated with the detector.

The controller 600 is also configured to cause implementation of a temporary transmission rate adjustment of the application service session, wherein the temporary transmission rate adjustment provides a radio access channel margin accommodating the upcoming communication interruption (compare with step 130 of Figure 3). The controller 600 may be further configured to cause transmission rate restoration after the communication interruption (compare with step 150 of Figure 3).

To this end, the controller 600 may comprise, or be otherwise associated with (e.g., connected, or connectable, to) a rate adjuster (RA; e.g., rate adjusting circuitry or a rate adjustment module) 602. The rate adjuster may be configured to implement the temporary transmission rate adjustment of the application service session, and possibly also configured to cause transmission rate restoration after the communication interruption.

When causing implementation of the temporary transmission rate adjustment comprises transmission of an adjustment command to the user device and/or the application server, such transmission may be via a wireless transceiver (TX/RX; e.g., transceiving circuitry or a transceiver module) 630 associated with (e.g., connected, or connectable, to) the controller and/or via a wired interface (I/O; e.g., interfacing circuitry or an interface module) 620 associated with (e.g., connected, or connectable, to) the controller.

The controller 600 may, additionally or alternatively, be configured to cause cancelling of the upcoming communication interruption as explained above; in response to that the trigger condition is met and/or in response to that an accommodation criterion is not met (compare with step 130 of Figure 3).

To this end, the controller 600 may comprise, or be otherwise associated with (e.g., connected, or connectable, to) a communication interruption canceller (CIC; e.g., communication interruption cancelling circuitry or a communication interruption cancellation module) 603. The communication interruption canceller may be configured to cancel the upcoming communication interruption.

The apparatus 650 may, for example, be comprisable (e.g., comprised) in a user device. Alternatively or additionally, the apparatus 650 may be configured to cause execution of one or more of the method steps described herein (e.g., in connection with any of Figures 5A and 5B). The apparatus comprises a controller (CNTR; e.g., controlling circuitry or a control module) 640.

The controller 640 is configured to cause reception of a user device adjustment command from the application server or a radio access network control node operating in the communication network, wherein the user device adjustment command is indicative of a trigger condition being met for the user device, the trigger condition indicating an upcoming communication interruption in relation to the application service session.

To this end, the controller 640 may comprise, or be otherwise associated with (e.g., connected, or connectable, to) a receiver; illustrated in Figure 6 as part of a wireless transceiver (TX/RX; e.g., transceiving circuitry or a transceiver module) 660. The receiver may be configured to receive the user device adjustment command.

The controller 640 is also configured to cause implementation of a temporary transmission rate adjustment of the application service session, wherein the temporary transmission rate adjustment provides a radio access channel margin accommodating the upcoming communication interruption.

To this end, the controller 640 may comprise, or be otherwise associated with (e.g., connected, or connectable, to) a rate adjuster (RA; e.g., rate adjusting circuitry or a rate adjustment module) 642. The rate adjuster may be configured to implement the temporary transmission rate adjustment of the application service session.

When causing implementation of the temporary transmission rate adjustment comprises transmission of an application server adjustment command to the application server, such transmission may be via a wireless transceiver (TX/RX; e.g., transceiving circuitry or a transceiver module) 660 associated with (e.g., connected, or connectable, to) the controller.

The apparatus 680 may, for example, be comprisable (e.g., comprised) in an application server. Alternatively or additionally, the apparatus 680 may be configured to cause execution of one or more of the method steps described herein (e.g., in connection with any of Figures 5A and 5B). The apparatus comprises a controller (CNTR; e.g., controlling circuitry or a control module) 670.

The controller 670 is configured to cause reception of an application server adjustment command from the user device or a radio access network control node operating in the communication network, wherein the application server adjustment command is indicative of a trigger condition being met for the user device, the trigger condition indicating an upcoming communication interruption in relation to the application service session.

To this end, the controller 670 may comprise, or be otherwise associated with (e.g., connected, or connectable, to) a receiver; illustrated in Figure 6 as part of a wired interface (I/O; e.g., interfacing circuitry or an interface module) 690. The receiver may be configured to receive the application server adjustment command.

The controller 670 is also configured to cause implementation of a temporary transmission rate adjustment of the application service session, wherein the temporary transmission rate adjustment provides a radio access channel margin accommodating the upcoming communication interruption.

To this end, the controller 670 may comprise, or be otherwise associated with (e.g., connected, or connectable, to) a rate adjuster (RA; e.g., rate adjusting circuitry or a rate adjustment module) 672. The rate adjuster may be configured to implement the temporary transmission rate adjustment of the application service session.

The described embodiments may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device, a network node, or a server.

Embodiments may appear within an electronic apparatus (such as a wireless communication device, a network node, or a server) comprising arrangements, circuitry, and/or logic according to any of the embodiments described herein. Alternatively or additionally, an electronic apparatus (such as a wireless communication device, a network node, or a server) may be configured to perform methods according to any of the embodiments described herein.

According to some embodiments, a computer program product comprises a tangible, or non-tangible, computer readable medium such as, for example a universal serial bus (USB) memory, a plug-in card, an embedded drive or a read only memory (ROM). Figure 7 illustrates an example computer readable medium in the form of a compact disc (CD) ROM 700. The computer readable medium has stored thereon a computer program comprising program instructions. The computer program is loadable into a data processor (PROC; e.g., data processing circuitry or a data processing unit) 720, which may, for example, be comprised in a wireless communication device, a network node, or a server 710. When loaded into the data processor, the computer program may be stored in a memory (MEM) 730 associated with or comprised in the data processor. According to some embodiments, the computer program may, when loaded into and run by the data processor, cause execution of method steps according to, for example, any of the methods illustrated in Figures 3, 5A, 5B, or otherwise described herein.

Generally, all terms used herein are to be interpreted according to their ordinary meaning in the relevant technical field, unless a different meaning is clearly given and/or is implied from the context in which it is used.

Reference has been made herein to various embodiments.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

The invention is defined by the appended claims.

## Claims

1. A method performed by
a radio access network control node operating in a communication network (20, 20', 520, 570) having an associated user device (30, 510, 560), wherein the user device has an ongoing application service session with an application server (40, 515, 565) via the communication network, wherein the application service session comprises a frame structure according to which a predetermined plurality of packets is transmitted within each frame, the method comprising:
detecting (110, 530, 580) that a trigger condition is met for the user device, the trigger condition indicating an upcoming communication interruption (140, 400, 538, 587) in relation to the application service session; and
causing (130) implementation of a temporary transmission rate adjustment of the application service session, wherein implementation of the temporary transmission rate adjustment is **characterized by** increasing an in-frame packet rate, and wherein the temporary transmission rate adjustment provides a radio access channel margin (440c, 440d) accommodating the upcoming communication interruption before a subsequent frame.

2. The method of claim 1, wherein the communication interruption is a measurement gap for the user device to perform inter-frequency measurements.

3. The method of any of claims 1 through 2, wherein detecting that the trigger condition is met comprises one or more of: receiving a signal indicative of the upcoming communication interruption, and determining a need for the upcoming communication interruption.

4. The method of any of claims 1 through 3, further comprising causing (150) transmission rate restoration after the communication interruption.

5. The method of any of claims 1 through 4, further comprising:
determining (120) whether the transmission rate adjustment meets an accommodation criterion relative the upcoming communication interruption, wherein causing the transmission rate adjustment is responsive to the accommodation criterion being met; and
cancelling (160) the upcoming communication interruption when the accommodation criterion is not met.

6. The method of any of claims 1 through 5, wherein the application service session is a real-time streaming application.

7. The method of any of claims 1 through 6, further comprising identifying (105) that the application service session is for a service wherein a deviation between a latency requirement of the service and an internal latency performance of the communication network is bounded.

8. The method of claim 7, wherein identifying that the application service session - for a service wherein the deviation between the latency requirement of the service and the internal latency performance of the communication network is bounded - is currently associated with the user device comprises one or more of:
detecting that a service class identifier is indicative of the service;
detecting that a bearer dedicated for low latency requirements is assigned for the service; and
determining that a traffic pattern of the service matches a latency sensitive traffic pattern.

9. The method of any of claims 6 through 8, wherein the bounded deviation between the latency requirement of the service and the internal latency performance of the communication network comprises one or more of:
a ratio between a latency requirement parameter value of the service and an internal latency performance parameter value of the communication network not exceeding a bounding threshold;
a latency requirement parameter value of the service and an internal latency performance parameter value of the communication network being in a same order of magnitude;
a latency requirement parameter value of the service and an internal latency performance parameter value of the communication network being equal; and
a required end-to-end round-trip-time of the service falling within a time range specified relative an internal round-trip-time of the communication network.

10. The method of any of claims 6 through 9, wherein the service has a maximum allowable latency which is lower than that of mobile broadband, MBB, services and/or higher than that of ultra-reliable low latency communication, URLLC, services.

11. A method performed by a
user device having an ongoing application service session with an application server via a communication network, wherein the application service session comprises a frame structure according to which a predetermined plurality of packets is transmitted within each frame, the method comprising:
receiving a user device adjustment command (534) from the application server or a radio access network control node operating in the communication network, wherein the user device adjustment command is indicative of a trigger condition being met for the user device, the trigger condition indicating an upcoming communication interruption in relation to the application service session; and
causing implementation of a temporary transmission rate adjustment of the application service session, wherein implementation of the temporary transmission rate adjustment is **characterized by** increasing an in-frame packet rate, and wherein the temporary transmission rate adjustment provides a radio access channel margin accommodating the upcoming communication interruption before a subsequent frame.

12. A method performed by
an application server having an ongoing application service session with a user device via a communication network, wherein the application service session comprises a frame structure according to which a predetermined plurality of packets is transmitted within each frame, the method comprising:
receiving an application server adjustment command (535, 581) from the user device or a radio access network control node operating in the communication network, wherein the application server adjustment command is indicative of a trigger condition being met for the user device, the trigger condition indicating an upcoming communication interruption in relation to the application service session; and
implementing (536, 582) a temporary transmission rate adjustment of the application service session, wherein implementation of the temporary transmission rate adjustment is **characterized by** increasing an in-frame packet rate, and wherein the temporary transmission rate adjustment provides a radio access channel margin accommodating the upcoming communication interruption before a subsequent frame.

13. A radio access network control node operating in a communication network having an associated user device, wherein the user device has an ongoing application service session with an application server via the communication network, wherein the application service session comprises a frame structure according to which a predetermined plurality of packets is transmitted within each frame, the radio access network control node comprising controlling circuitry
(600) configured to cause:
detection of that a trigger condition is met for the user device, the trigger condition indicating an upcoming communication interruption in relation to the application service session; and
implementation of a temporary transmission rate adjustment of the application service session, wherein implementation of the temporary transmission rate adjustment comprises increasing an in-frame packet rate, and wherein the temporary transmission rate adjustment provides a radio access channel margin accommodating the upcoming communication interruption before a subsequent frame.

14. A user device having an ongoing application service session with an application server via a communication network, wherein the application service session comprises a frame structure according to which a predetermined plurality of packets is transmitted within each frame, the user device
comprising controlling circuitry (640) configured to cause:
reception of a user device adjustment command from the application server or a radio access network control node operating in the communication network, wherein the user device adjustment command is indicative of a trigger condition being met for the user device, the trigger condition indicating an upcoming communication interruption in relation to the application service session; and
implementation of a temporary transmission rate adjustment of the application service session, wherein implementation of the temporary transmission rate adjustment comprises increasing an in-frame packet rate, and wherein the temporary transmission rate adjustment provides a radio access channel margin accommodating the upcoming communication interruption before a subsequent frame.

15. An application server having an ongoing application service session with a user device via a communication network, wherein the application service session comprises a frame structure according to which a predetermined plurality of packets is transmitted within each frame, the application server
comprising controlling circuitry (670) configured to cause:
reception of an application server adjustment command from the user device or a radio access network control node operating in the communication network, wherein the application server adjustment command is indicative of a trigger condition being met for the user device, the trigger condition indicating an upcoming communication interruption in relation to the application service session; and
implementation of a temporary transmission rate adjustment of the application service session, wherein implementation of the temporary transmission rate adjustment is **characterized by** increasing an in-frame packet rate, and wherein the temporary transmission rate adjustment provides a radio access channel margin accommodating the upcoming communication interruption before a subsequent frame.

## Patentansprüche

1. Verfahren, das von einem Funkzugangsnetzwerk-Steuerknoten durchgeführt wird, der in einem Kommunikationsnetzwerk (20, 20', 520, 570) betrieben wird, das eine zugeordnete Benutzervorrichtung (30, 510, 560) aufweist, wobei die Benutzervorrichtung eine laufende Anwendungsdienstsitzung mit einem Anwendungsserver (40, 515, 565) über das Kommunikationsnetzwerk aufweist, wobei die Anwendungsdienstsitzung eine Frame-Struktur umfasst, gemäß der eine vorbestimmte Vielzahl von Paketen innerhalb jedes Frames übertragen wird, wobei das Verfahren Folgendes umfasst:
Erfassen (110, 530, 580), dass eine Auslösebedingung für die Benutzervorrichtung erfüllt ist, wobei die Auslösebedingung eine bevorstehende Kommunikationsunterbrechung (140, 400, 538, 587) in Bezug auf die Anwendungsdienstsitzung angibt; und
Veranlassen (130) einer Implementierung einer temporären Übertragungsratenanpassung der Anwendungsdienstsitzung, wobei Implementierung der temporären Übertragungsratenanpassung durch Erhöhen einer In-Frame-Paketrate gekennzeichnet ist und wobei die temporäre Übertragungsratenanpassung einen Funkzugangskanalspielraum (440c, 440d) bereitstellt, der die bevorstehende Kommunikationsunterbrechung vor einem nachfolgenden Frame berücksichtigt.

2. Verfahren nach Anspruch 1, wobei die Kommunikationsunterbrechung eine Messlücke für die Benutzervorrichtung ist, um Zwischenfrequenzmessungen durchzuführen.

3. Verfahren nach einem der Ansprüche 1 bis 2, wobei das Erfassen, dass die Auslösebedingung erfüllt ist, eines oder mehrere von Folgendem umfasst: Empfangen eines Signals, das die bevorstehende Kommunikationsunterbrechung angibt, und Bestimmen einer Notwendigkeit für die bevorstehende Kommunikationsunterbrechung.

4. Verfahren nach einem der Ansprüche 1 bis 3, das weiter das Veranlassen (150) einer Übertragungsratenwiederherstellung nach der Kommunikationsunterbrechung umfasst.

5. Verfahren nach einem der Ansprüche 1 bis 4, weiter umfassend:
Bestimmen (120), ob die Übertragungsratenanpassung ein Anpassungskriterium bezüglich der bevorstehenden Kommunikationsunterbrechung erfüllt, wobei Veranlassen der Übertragungsratenanpassung als Reaktion darauf erfolgt, dass das Anpassungskriterium erfüllt ist; und
Abbrechen (160) der bevorstehenden Kommunikationsunterbrechung, wenn das Anpassungskriterium nicht erfüllt ist.

6. Verfahren nach einem der Ansprüche 1 bis 5, wobei die Anwendungsdienstsitzung eine Echtzeit-Streaming-Anwendung ist.

7. Verfahren nach einem der Ansprüche 1 bis 6, das weiter das Identifizieren (105) umfasst, dass die Anwendungsdienstsitzung für einen Dienst ist, wobei eine Abweichung zwischen einer Latenzanforderung des Dienstes und einer internen Latenzleistung des Kommunikationsnetzwerks begrenzt ist.

8. Verfahren nach Anspruch 7, wobei das Identifizieren, dass die Anwendungsdienstsitzung - für einen Dienst, wobei die Abweichung zwischen der Latenzanforderung des Dienstes und der internen Latenzleistung des Kommunikationsnetzwerks begrenzt ist - derzeit der Benutzervorrichtung zugeordnet ist, eines oder mehrere von Folgendem umfasst:
Erfassen, dass eine Dienstklassenkennung den Dienst angibt;
Erfassen, dass dem Dienst ein Träger zugewiesen ist, der für Anforderungen niedriger Latenz vorgesehen ist; und
Bestimmen, dass eine Verkehrsstruktur des Dienstes mit einer latenzempfindlichen Verkehrsstruktur übereinstimmt.

9. Verfahren nach einem der Ansprüche 6 bis 8, wobei die begrenzte Abweichung zwischen der Latenzanforderung des Dienstes und der internen Latenzleistung des Kommunikationsnetzwerks eines oder mehrere von Folgendem umfasst:
ein Verhältnis zwischen einem Latenzanforderungsparameterwert des Dienstes und einem internen Latenzleistungsparameterwert des Kommunikationsnetzwerks überschreitet einen begrenzenden Schwellenwert nicht;
ein Latenzanforderungsparameterwert des Dienstes und ein interner Latenzleistungsparameterwert des Kommunikationsnetzwerks liegen in der gleichen Größenordnung;
ein Latenzanforderungsparameterwert des Dienstes und ein interner Latenzleistungsparameterwert des Kommunikationsnetzwerks sind gleich; und
eine erforderliche Ende-zu-Ende-Roundtrip-Zeit des Dienstes liegt innerhalb eines Zeitbereichs, der relativ zu einer internen Roundtrip-Zeit des Kommunikationsnetzwerks spezifiziert ist.

10. Verfahren nach einem der Ansprüche 6 bis 9, wobei der Dienst eine maximal zulässige Latenz aufweist, die niedriger als die von mobilen Breitband-, MBB-, Diensten ist und/oder höher als die von ultrazuverlässigen latenzarmen Kommunikations-, URLLC-, Diensten ist.

11. Verfahren, das von einer Benutzervorrichtung durchgeführt wird, die eine laufende Anwendungsdienstsitzung mit einem Anwendungsserver über ein Kommunikationsnetzwerk aufweist, wobei die Anwendungsdienstsitzung eine Frame-Struktur umfasst, gemäß der eine vorbestimmte Vielzahl von Paketen innerhalb jedes Frames übertragen wird, wobei das Verfahren umfasst:
Empfangen eines Benutzervorrichtungsanpassungsbefehls (534) von dem Anwendungsserver oder einem Funkzugangsnetzwerk-Steuerknoten, der in dem Kommunikationsnetzwerk betrieben wird, wobei der Benutzervorrichtungsanpassungsbefehl angibt, dass eine Auslösebedingung für die Benutzervorrichtung erfüllt ist, wobei die Auslösebedingung eine bevorstehende Kommunikationsunterbrechung in Bezug auf die Anwendungsdienstsitzung angibt; und
Veranlassen einer Implementierung einer temporären Übertragungsratenanpassung der Anwendungsdienstsitzung, wobei die Implementierung der temporären Übertragungsratenanpassung durch Erhöhen einer In-Frame-Paketrate gekennzeichnet ist und wobei die temporäre Übertragungsratenanpassung einen Funkzugangskanalspielraum bereitstellt, der die bevorstehende Kommunikationsunterbrechung vor einem nachfolgenden Frame berücksichtigt.

12. Verfahren, das von einem Anwendungsserver durchgeführt wird, der eine laufende Anwendungsdienstsitzung mit einer Benutzervorrichtung über ein Kommunikationsnetzwerk aufweist, wobei die Anwendungsdienstsitzung eine Frame-Struktur umfasst, gemäß der eine vorbestimmte Vielzahl von Paketen innerhalb jedes Frames übertragen wird, wobei das Verfahren umfasst:
Empfangen eines Anwendungsserveranpassungsbefehls (535, 581) von der Benutzervorrichtung oder einem Funkzugangsnetzwerk-Steuerknoten, der in dem Kommunikationsnetzwerk betrieben wird, wobei der Anwendungsserveranpassungsbefehl angibt, dass eine Auslösebedingung für die Benutzervorrichtung erfüllt ist, wobei die Auslösebedingung eine bevorstehende Kommunikationsunterbrechung in Bezug auf die Anwendungsdienstsitzung angibt; und
Implementieren (536, 582) einer temporären Übertragungsratenanpassung der Anwendungsdienstsitzung, wobei die Implementierung der temporären Übertragungsratenanpassung durch Erhöhen einer In-Frame-Paketrate gekennzeichnet ist und wobei die temporäre Übertragungsratenanpassung einen Funkzugangskanalspielraum bereitstellt, der die bevorstehende Kommunikationsunterbrechung vor einem nachfolgenden Frame berücksichtigt.

13. Funkzugangsnetzwerk-Steuerknoten, der in einem Kommunikationsnetzwerk betrieben wird, das eine zugeordnete Benutzervorrichtung aufweist, wobei die Benutzervorrichtung eine laufende Anwendungsdienstsitzung mit einem Anwendungsserver über das Kommunikationsnetzwerk aufweist, wobei die Anwendungsdienstsitzung eine Frame-Struktur umfasst, gemäß der eine vorbestimmte Vielzahl von Paketen innerhalb jedes Frames übertragen wird, wobei der Funkzugangsnetzwerk-Steuerknoten eine Steuerschaltung (600) umfasst, die dazu konfiguriert ist, Folgendes zu veranlassen:
Erfassung dessen, dass eine Auslösebedingung für die Benutzervorrichtung erfüllt ist, wobei die Auslösebedingung eine bevorstehende Kommunikationsunterbrechung in Bezug auf die Anwendungsdienstsitzung angibt; und
Implementierung einer temporären Übertragungsratenanpassung der Anwendungsdienstsitzung, wobei die Implementierung der temporären Übertragungsratenanpassung Erhöhen einer In-Frame-Paketrate umfasst und wobei die temporäre Übertragungsratenanpassung einen Funkzugangskanalspielraum bereitstellt, der die bevorstehende Kommunikationsunterbrechung vor einem nachfolgenden Frame berücksichtigt.

14. Benutzervorrichtung, die eine laufende Anwendungsdienstsitzung mit einem Anwendungsserver über ein Kommunikationsnetzwerk aufweist, wobei die Anwendungsdienstsitzung eine Frame-Struktur umfasst, gemäß der eine vorbestimmte Vielzahl von Paketen innerhalb jedes Frames übertragen wird, wobei die Benutzervorrichtung eine Steuerschaltung (640) umfasst, die dazu konfiguriert ist, Folgendes zu veranlassen:
Empfang eines Benutzervorrichtungsanpassungsbefehls von dem Anwendungsserver oder einem Funkzugangsnetzwerk-Steuerknoten, der in dem Kommunikationsnetzwerk betrieben wird, wobei der Benutzervorrichtungsanpassungsbefehl angibt, dass eine Auslösebedingung für die Benutzervorrichtung erfüllt ist, wobei die Auslösebedingung eine bevorstehende Kommunikationsunterbrechung in Bezug auf die Anwendungsdienstsitzung angibt; und
Implementierung einer temporären Übertragungsratenanpassung der Anwendungsdienstsitzung, wobei die Implementierung der temporären Übertragungsratenanpassung Erhöhen einer In-Frame-Paketrate umfasst und wobei die temporäre Übertragungsratenanpassung einen Funkzugangskanalspielraum bereitstellt, der die bevorstehende Kommunikationsunterbrechung vor einem nachfolgenden Frame berücksichtigt.

15. Anwendungsserver, der eine laufende Anwendungsdienstsitzung mit einer Benutzervorrichtung über ein Kommunikationsnetzwerk aufweist, wobei die Anwendungsdienstsitzung eine Frame-Struktur umfasst, gemäß der eine vorbestimmte Vielzahl von Paketen innerhalb jedes Frames übertragen wird, wobei der Anwendungsserver eine Steuerschaltung (670) umfasst, die dazu konfiguriert ist, Folgendes zu veranlassen:
Empfang eines Anwendungsserveranpassungsbefehls von der Benutzervorrichtung oder einem Funkzugangsnetzwerk-Steuerknoten, der in dem Kommunikationsnetzwerk betrieben wird, wobei der Anwendungsserveranpassungsbefehl angibt, dass eine Auslösebedingung für die Benutzervorrichtung erfüllt ist, wobei die Auslösebedingung eine bevorstehende Kommunikationsunterbrechung in Bezug auf die Anwendungsdienstsitzung angibt; und
Implementierung einer temporären Übertragungsratenanpassung der Anwendungsdienstsitzung, wobei die Implementierung der temporären Übertragungsratenanpassung durch Erhöhen einer In-Frame-Paketrate gekennzeichnet ist und wobei die temporäre Übertragungsratenanpassung einen Funkzugangskanalspielraum bereitstellt, der die bevorstehende Kommunikationsunterbrechung vor einem nachfolgenden Frame berücksichtigt.

## Revendications

1. Procédé effectué par un noeud de commande de réseau d'accès radio fonctionnant dans un réseau de communication (20, 20', 520, 570) présentant un dispositif utilisateur associé (30, 510, 560), dans lequel le dispositif utilisateur présente une session de service d'application en cours avec un serveur d'application (40, 515, 565) par l'intermédiaire du réseau de communication, dans lequel la session de service d'application comprend une structure de trame selon laquelle une pluralité prédéterminée de paquets sont transmis au sein de chaque trame, le procédé comprenant :
la détection (110, 530, 580) qu'une condition de déclenchement est remplie pour le dispositif utilisateur, la condition de déclenchement indiquant une interruption de communication à venir (140, 400, 538, 587) en relation avec la session de service d'application ; et
le fait de provoquer (130) l'implémentation d'un ajustement temporaire de débit de transmission de la session de service d'application, dans lequel l'implémentation de l'ajustement temporaire de débit de transmission est **caractérisée par** l'augmentation d'un débit de paquets dans la trame, et dans lequel l'ajustement temporaire de débit de transmission fournit une marge de canal d'accès radio (440c, 440d) adaptée à l'interruption de communication à venir avant une trame suivante.

2. Procédé selon la revendication 1, dans lequel l'interruption de communication est un intervalle de mesure permettant au dispositif utilisateur d'effectuer des mesures inter-fréquences.

3. Procédé selon l'une quelconque des revendications 1 à 2, dans lequel la détection que la condition de déclenchement est remplie comprend une ou plusieurs parmi : la réception d'un signal indiquant l'interruption de communication à venir et la détermination d'une nécessité de l'interruption de communication à venir.

4. Procédé selon l'une quelconque des revendications 1 à 3, comprenant en outre le fait de provoquer (150) le rétablissement de débit de transmission après l'interruption de communication.

5. Procédé selon l'une quelconque des revendications 1 à 4, comprenant en outre :
la détermination (120) pour établir si l'ajustement de débit de transmission répond à un critère d'adaptation relatif à l'interruption de communication à venir, dans lequel le fait de provoquer l'ajustement de débit de transmission répond au fait que le critère d'adaptation est satisfait ; et
l'annulation (160) de l'interruption de communication à venir lorsque le critère d'adaptation n'est pas satisfait.

6. Procédé selon l'une quelconque des revendications 1 à 5, dans lequel la session de service d'application est une application de diffusion en continu en temps réel.

7. Procédé selon l'une quelconque des revendications 1 à 6, comprenant en outre l'identification (105) que la session de service d'application est destinée à un service dans lequel un écart entre une exigence de latence du service et une performance de latence interne du réseau de communication est limité.

8. Procédé selon la revendication 7, dans lequel l'identification que la session de service d'application - pour un service dans lequel l'écart entre l'exigence de latence du service et la performance de latence interne du réseau de communication est limité - est actuellement associée au dispositif utilisateur comprend une ou plusieurs parmi :
la détection qu'un identifiant de classe de service indique le service ;
la détection qu'une porteuse dédiée aux exigences de faible latence est attribuée au service ; et
la détermination qu'un modèle de trafic du service correspond à un modèle de trafic sensible à la latence.

9. Procédé selon l'une quelconque des revendications 6 à 8, dans lequel l'écart limité entre l'exigence de latence du service et la performance de latence interne du réseau de communication comprend un ou plusieurs parmi :
un rapport entre une valeur de paramètre d'exigence de latence du service et une valeur de paramètre de performance de latence interne du réseau de communication ne dépassant pas un seuil limite ;
une valeur de paramètre d'exigence de latence du service et une valeur de paramètre de performance de latence interne du réseau de communication étant du même ordre de grandeur ;
une valeur de paramètre d'exigence de latence du service et une valeur de paramètre de performance de latence interne du réseau de communication étant égales ; et
un temps d'aller-retour de bout en bout requis du service tombant dans une plage de temps spécifiée par rapport à un temps d'aller-retour interne du réseau de communication.

10. Procédé selon l'une quelconque des revendications 6 à 9, dans lequel le service présente une latence maximale admissible qui est inférieure à celle des services mobiles à large bande, MBB et/ou supérieure à celle des services de communication ultra-fiables à faible latence, URLLC.

11. Procédé effectué par un dispositif utilisateur présentant une session de service d'application en cours avec un serveur d'application par l'intermédiaire d'un réseau de communication, dans lequel la session de service d'application comprend une structure de trame selon laquelle une pluralité prédéterminée de paquets sont transmis au sein de chaque trame, le procédé comprenant :
la réception d'une commande (534) d'ajustement de dispositif utilisateur en provenance du serveur d'application ou d'un noeud de commande de réseau d'accès radio fonctionnant dans le réseau de communication, dans lequel la commande d'ajustement de dispositif utilisateur indique qu'une condition de déclenchement est remplie pour le dispositif utilisateur, la condition de déclenchement indiquant une interruption de communication à venir relative à la session de service d'application ; et
le fait de provoquer l'implémentation d'un ajustement temporaire de débit de transmission de la session de service d'application, dans lequel l'implémentation de l'ajustement temporaire de débit de transmission est **caractérisée par** l'augmentation d'un débit de paquets dans la trame, et dans lequel l'ajustement temporaire de débit de transmission fournit une marge de canal d'accès radio adaptée à l'interruption de communication à venir avant une trame suivante.

12. Procédé effectué par un serveur d'application présentant une session de service d'application en cours avec un dispositif utilisateur par l'intermédiaire d'un réseau de communication, dans lequel la session de service d'application comprend une structure de trame selon laquelle une pluralité prédéterminée de paquets sont transmis au sein de chaque trame, le procédé comprenant :
la réception d'une commande (535, 581) d'ajustement de serveur d'application en provenance du dispositif utilisateur ou d'un noeud de commande de réseau d'accès radio fonctionnant dans le réseau de communication, dans lequel la commande d'ajustement de serveur d'application indique qu'une condition de déclenchement est remplie pour le dispositif utilisateur, la condition de déclenchement indiquant une interruption de communication à venir relative à la session de service d'application ; et
l'implémentation (536, 582) d'un ajustement temporaire de débit de transmission de la session de service d'application, dans lequel l'implémentation de l'ajustement temporaire de débit de transmission est **caractérisée par** l'augmentation d'un débit de paquets dans la trame, et dans lequel l'ajustement temporaire de débit de transmission fournit une marge de canal d'accès radio adaptée à l'interruption de communication à venir avant une trame suivante.

13. Noeud de commande de réseau d'accès radio fonctionnant dans un réseau de communication présentant un dispositif utilisateur associé, dans lequel le dispositif utilisateur présente une session de service d'application en cours avec un serveur d'application par l'intermédiaire du réseau de communication, dans lequel la session de service d'application comprend une structure de trame selon laquelle une pluralité prédéterminée de paquets sont transmis au sein de chaque trame, le noeud de commande de réseau d'accès radio comprenant des circuits de commande (600) configurés pour provoquer :
la détection qu'une condition de déclenchement est remplie pour le dispositif utilisateur, la condition de déclenchement indiquant une interruption de communication à venir en relation avec la session de service d'application ; et
l'implémentation d'un ajustement temporaire de débit de transmission de la session de service d'application, dans lequel l'implémentation de l'ajustement temporaire de débit de transmission comprend l'augmentation d'un débit de paquets dans la trame, et dans lequel l'ajustement temporaire de débit de transmission fournit une marge de canal d'accès radio adaptée à l'interruption de communication à venir avant une trame suivante.

14. Dispositif utilisateur présentant une session de service d'application en cours avec un serveur d'application par l'intermédiaire d'un réseau de communication, dans lequel la session de service d'application comprend une structure de trame selon laquelle une pluralité prédéterminée de paquets sont transmis au sein de chaque trame, le dispositif utilisateur comprenant des circuits de commande (640) configurés pour provoquer :
la réception d'une commande d'ajustement de dispositif utilisateur en provenance du serveur d'application ou d'un noeud de commande de réseau d'accès radio fonctionnant dans le réseau de communication, dans lequel la commande d'ajustement de dispositif utilisateur indique qu'une condition de déclenchement est remplie pour le dispositif utilisateur, la condition de déclenchement indiquant une interruption de communication à venir relative à la session de service d'application ; et
l'implémentation d'un ajustement temporaire de débit de transmission de la session de service d'application, dans lequel l'implémentation de l'ajustement temporaire de débit de transmission comprend l'augmentation d'un débit de paquets dans la trame, et dans lequel l'ajustement temporaire de débit de transmission fournit une marge de canal d'accès radio adaptée à l'interruption de communication à venir avant une trame suivante.

15. Serveur d'application présentant une session de service d'application en cours avec un dispositif utilisateur par l'intermédiaire d'un réseau de communication, dans lequel la session de service d'application comprend une structure de trame selon laquelle une pluralité prédéterminée de paquets sont transmis au sein de chaque trame, le serveur d'application comprenant des circuits de commande (670) configurés pour provoquer :
la réception d'une commande d'ajustement de serveur d'application en provenance du dispositif utilisateur ou d'un noeud de commande de réseau d'accès radio fonctionnant dans le réseau de communication, dans lequel la commande d'ajustement de serveur d'application indique qu'une condition de déclenchement est remplie pour le dispositif utilisateur, la condition de déclenchement indiquant une interruption de communication à venir relative à la session de service d'application ; et
l'implémentation d'un ajustement temporaire de débit de transmission de la session de service d'application, dans lequel l'implémentation de l'ajustement temporaire de débit de transmission est **caractérisée par** l'augmentation d'un débit de paquets dans la trame, et dans lequel l'ajustement temporaire de débit de transmission fournit une marge de canal d'accès radio adaptée à l'interruption de communication à venir avant une trame suivante.
